(19)

**Europäisches Patentamt**
**European Patent Office**
**Office européen des brevets**

(11) **EP 3 579 405 B1**

(12) **EUROPEAN PATENT SPECIFICATION**

(45) Date of publication and mention
of the grant of the patent:
**08.07.2020  Bulletin 2020/28**

(51) Int Cl.:
*H02P 29/66* *(2016.01)*     *H02P 21/09* *(2016.01)*

(21) Application number: **19178029.5**

(22) Date of filing: **04.06.2019**

(54) **A METHOD AND AN APPARATUS FOR DETERMINING A TEMPERATURE OF A ROTOR**

VERFAHREN UND VORRICHTUNG ZUR BESTIMMUNG EINER TEMPERATUR EINES ROTORS

PROCÉDÉ ET APPAREIL POUR DÉTERMINER LA TEMPÉRATURE D'UN ROTOR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.06.2018  GB 201809170**

(43) Date of publication of application:
**11.12.2019  Bulletin 2019/50**

(73) Proprietor: **Bombardier Transportation GmbH
10785 Berlin (DE)**

(72) Inventors:
  • **Dr. Vogelsberger, Markus
  6152 Trins (AT)**
  • **Bazant, Martin
  8708 Männedorf (CH)**
  • **Dr. Wolbank, Thomas
  1050 Wien (AT)**

(74) Representative: **Patentanwälte Bressel und
Partner mbB
Potsdamer Platz 10
10785 Berlin (DE)**

(56) References cited:
**EP-A1- 2 405 570     WO-A1-2009/083324**

• **STAINES C S ET AL: "Sensorless control of
induction Machines at zero and low frequency
using zero sequence currents", IEEE
TRANSACTIONS ON INDUSTRIAL
ELECTRONICS IEEE USA, vol. 53, no. 1,
December 2005 (2005-12), pages 195-206,
XP002794602, ISSN: 0278-0046**
• **REIGOSA DAVID DIAZ ET AL: "Sensorless
Control of Doubly Fed Induction Generators
Based on Stator High-Frequency Signal
Injection", IEEE TRANSACTIONS ON INDUSTRY
APPLICATIONS, vol. 50, no. 5, 1 September 2014
(2014-09-01), pages 3382-3391, XP011559100,
IEEE SERVICE CENTER, PISCATAWAY, NJ, US
ISSN: 0093-9994, DOI: 10.1109/TIA.2014.2303255
[retrieved on 2014-09-16]**
• **SCHROEDL M: "Sensorless control of AC
machines at low speed and standstill based on
the "INFORM" method", CONFERENCE
RECORD OF THE 1996 IEEE INDUSTRY
APPLICATIONS CONFERENCE - 31ST IAS
ANNUAL MEETING, IEEE SERVICE CENTER, US,
vol. 1, 6 October 1996 (1996-10-06), pages
270-277, XP010201136, DOI:
10.1109/IAS.1996.557028 ISBN:
978-0-7803-3544-8**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The invention relates to a method and an apparatus for determining a temperature of a rotor of an electric induction machine.

In the field of control of induction machines, the so-called sensorless control is known which allows to reduce costs and size of the machine and to increase system reliability.

Especially for railway systems used for public or cargo transport, such an increased system reliability is desired. A first sensorless control strategy relies on a fundamental wave representation of the machine. However, its accuracy reduces in the low speed range and is subject to failure in the case of zero electrical frequency. Such an approach is e.g. described in the document C. Spiteri et. al., "Sensorless control of induction machines at zero and low frequency using zero sequence currents", IEEE Transactions on Industrial Electronics, vol. 53, no. 1, pages 195 - 206, 2005.

Another approach uses a strategy based on non-fundamental-wave properties of the machines and involves the tracking of saliencies of the machine that are either inherent or especially constructed. Such a strategy is e.g. described in the document D. Reigosa et. al., "Sensorless Control of Doubly-Fed Induction Generators Based on Stator High-Frequency Signal Injection", IEEE Transactions on Industry Application, in print, 2014.

Saliency extraction is usually accomplished by measuring the current response to a voltage excitation distinct in frequency from the fundamental wave excitation. In particular known is the so-called voltage pulse excitation, wherein pulse excitation can be established separated from the pulse width modulation or integrated into the fundamental wave pulse width modulation excitation. This is e.g. described in EP 2 405 570 A1.

The corresponding control methods are able to track the rotor position and thus establish speed sensorless control of the induction machines.

Besides that control issue, an accurate estimation and monitoring of the rotor temperature is desired since it allows to prevent overheating of the rotor or adjacent components of the electric induction machine.

Usually, in particular in standard applications, a temperature sensor for sensing the rotor temperature is not available on the rotor side. Known are approaches in which a sensor on the stator winding is available, wherein the rotor temperature is estimated based on the output of said sensor and thermal models.

Other methods to estimate the temperature involve an estimation based on thermal-models which is e.g. described in the document P. H. Mellor and D. R. Turner, "Real Time Prediction of Temperatures in an Induction Motor Using a Microprocessor", Electric Machine Power Systems, pages 333 - 352, 1988. These methods are usually based on a direct detection of rotor resistance variations due to temperature changes and require precise knowledge of the injected stator voltage. WO 2009/083324A1 discloses a permanent magnet synchron machine with variation of the flux as sensing parameter.

There is the technical problem of providing a method and an apparatus for determining a temperature of a rotor of an electric induction machine in an accurate and reliable manner. The solution to said technical problem is provided by the subject-matter with the features of claim 1 and claim 12. Further advantageous embodiments of the invention are provided by the subject-matter with the features of the sub claims.

It is a fundamental idea of the invention to determine the rotor temperature based on an analysis of inherent machine saliencies. It is in particular possible to use the angle of the stator flux saturation saliency to monitor the rotor resistance and to determine the rotor temperature based on the rotor resistance.

The invention is based on the fact that the temperature of the rotor significantly influences the rotor resistance and thus the rotor time constant which provides one main parameter for the control of the machine using a machine model based on the so-called rotor equations. In order to determine the value of the rotor resistance or the time constant, the inherent machine saliencies are analysed, e.g. by using an excitation of the machine with voltage pulses generated by the inverter. The reaction of the machine is a current change that is mainly influenced by the transient inductances of the machine. Additional influences are provided by the stator resistance and a DC (direct current) link voltage magnitude. An exemplary method for the determination of the inherent machine saliencies using the aforementioned excitation is provided by the so-called INFORM method which is e.g. described in the aforementioned EP 2 405 570 A1 or in the document M. Schroedl," Sensorless control of AC machines at low speed and standstill based on the INFORM method", IEEE Industry Applications Conference, pages 270 - 277, 1996.

A method of determining a temperature of a rotor of an electric induction machine is proposed. The method comprises the following steps:

In a prestep, a set of temperature-independent comparative stator flux saturation saliency angles are determined in a reference (coordinate) frame. A preferable reference frame is a coordinate frame fixed to the stator current angle or to multiples thereof. It is, however, also possible to use other reference frames. The comparative stator flux saturation saliency angles will be used for comparison purposes in a following step of the proposed method. In particular, said saliency angles provide reference values. These reference values can e.g. be determined with respect to different load currents, e.g. during commissioning of the electric machine. In other words, these reference values can be assigned to different load values which are e.g. represented by different load currents.

In this context, it is important to notice that the shape of the function which represents the relationship between a load value and a magnitude of the stator flux saturation saliency angle does only depend on the design of the machine and does not depend on the rotor temperature. It is thus not necessary to perform the determination of said reference values for the stator flux saturation saliency angle at different temperature values.

The set of temperature-dependent comparative stator flux saturation saliency angles can be stored, e.g. in a memory unit.

In a first step, an actual stator flux saturation saliency angle is determined in the aforementioned reference coordinate frame. The actual stator flux saturation saliency angle is determined depending on a machine model which comprises at least one rotor temperature-dependent parameter. The machine model can comprise the so-called rotor equations or can be based on a rotor current model. Such equations e.g. comprise one or more of the following equations:

$$0 = i_R \times r_R + j(\omega_S - \omega_m) \times \Psi_R, \text{ formula 1,}$$

$$\Psi_R = l_R \times (i_S + i_R), \text{ formula 2,}$$

$$\Psi_R = (i_S \times r_R)/(1/\tau_R + j(\omega_S - \omega_m)), \text{ formula 3}$$

$$\arg(\Psi_R) = -\text{atan}[(\omega_S - \omega_m) \times \tau_R], \text{ formula 4.}$$

In these equations, the parameter $i_R$ denotes the rotor current phasor, the parameter $\psi_R$ the rotor flux linkage phasor, the parameter $l_R$ the rotor inductance, the parameter $r_R$ the rotor resistance, the parameter $T_R$ the rotor time constant, the parameter $i_S$ the stator current phasor, the parameter $\omega_S$ the electrical frequency and the parameter $\omega_m$ the mechanical frequency. In this setting, the rotor resistance $r_R$ is a parameter depending on the temperature.

It is possible that the actual stator flux saturation saliency angle is determined depending on the stator current phasor $i_S$. More particular, it is possible that the actual stator flux saturation saliency angle is determined depending on a rotor flux at an actual point of operation, wherein the rotor flux is temperature-dependent. More particular, the actual stator flux saturation saliency angle can be determined as the temperature-dependent rotor flux linkage angle or depending on said temperature-dependent rotor flux linkage angle.

It is in particular possible to determine the rotor flux linkage phasor depending on the stator current phasor $i_S$. It is further possible to determine the stator current phasor $i_S$ depending on the output signals of current sensors for measuring the phase current in at least one, preferably in all, phases of the electric machine. Further, electrical and/or mechanical properties, e.g. the frequency/frequencies, can also be measured, e.g. by using adequate sensing means. Further, the actual stator flux saturation saliency angle is determined for the actually given load value (actual load value), wherein the load value is e.g. represented by a value of a magnetizing current and/or a load current. Such a current can e.g. measured, e.g. by a current sensor. In other words, the fundamental wave model of the machine can be used in the first step to determine the stator flux saturation saliency angle.

It is further possible that a current provided to the electric machine during operation is controlled using a current-based control scheme. The current control can be performed using the aforementioned machine model, in particular based on the rotor flux linkage phasor. In particular, the current control can be a so-called field-oriented control.

The actual stator flux saturation saliency angle can e.g. be determined using the aforementioned INFORM-method.

In a second step, a temperature-independent comparative stator flux saturation saliency angle is determined, in particular depending on an actual load value. Alternatively or in addition, the temperature-independent comparative stator flux saturation saliency angle can be determined depending on a flux value, e.g. an actual stator flux or rotor flux value.

This comparative saliency angle denotes an angle of the aforementioned set of temperature-independent comparative stator flux saturation saliency angles which has been determined for the same or similar load value. The term similar can mean that the deviation between the loads, i.e. the magnetizing and/or load currents, used for the determination do not deviate more than a predetermined amount from each other. Said temperature-independent comparative stator flux saturation saliency angle can provide a set value or reference value for the flux saturation saliency angle.

In a third step, the deviation between the actual flux saturation saliency angle determined in the first step and the temperature-independent comparative stator flux saturation saliency angle determined in the second step is determined.

In a fourth step, the rotor temperature of the electric induction machine is determined as the temperature which minimizes said deviation. It is e.g. possible to tune or adapt a value of the rotor temperature and consequently also the rotor time constant to a value for which the deviation between the actual and the comparative stator flux saturation saliency angle is minimized. In other words, one temperature-dependent parameter of the aforementioned machine model is changed such that the actual stator flux saturation saliency angle determined in the first step is as close as possible to, preferably equal to, the determined comparative saliency angle providing the set value determined in the second step.

This approach is based on the fact that a deviation between the a rotor flux linkage angle which is determined using the machine model and the truly existing rotor flux linkage angle will exist if the rotor time constant in the machine model is not adapted to the truly present rotor temperature. As a result, the rotor flux linkage angle determined based on the machine model does not represent the true rotor flux linkage angle and leads to an inadequate adaption of currents within the machine control. This inaccurate adaption of the current components or of the machine control leads to an inaccurate adaption of the point of operation of the electric machine which, in term, affects the stator flux saliency angle. Consequently, there is also a deviation between the actual stator flux saturation saliency angle and the temperature-independent comparative stator flux saturation saliency angle providing the set value.

This method advantageously allows an accurate, reliable and fast determination of the rotor temperature. Further, the method advantageously uses existing components, in particular components used for speed sensorless control and thus does not require additional components, e.g. sensors. As a further advantage, no complex thermal model has to be evaluated for the accurate determination of the rotor temperature. Further, the determination of the rotor temperature is possible without using a speed sensor. It is, however, also possible to determine the rotor temperature if such a speed sensor is present. As a further advantage, a reliable determination of the rotor temperature is also possible for small speed values.

In another embodiment, a temperature-dependent rotor resistance parameter of the machine model is determined which minimizes the deviation, wherein the rotor temperature is determined depending on said rotor resistance parameter. The rotor resistance parameter can e.g. be the aforementioned rotor resistance parameter $r_R$. In other words, the rotor temperature is determined such that the resulting rotor resistance parameter used within the evaluation of the machine model to determine the actual stator flux saturation saliency angle is tuned such that the aforementioned deviation between the saliency angles is minimized. This advantageously allows an easy-to-implement determination of the rotor temperature since the well-established machine model and its parameters can be used.

In another embodiment, the reference frame is a coordinate frame fixed to the stator current angle or to multiples thereof, i.e. multiples of the stator current angle. This advantageously allows a simple and easy-to-implement determination of the actual stator flux saturation saliency angle.

In another embodiment, the set of temperature-independent comparative stator flux saturation saliency angles is determined with respect to a set of stator current phasors for different magnetizing currents and/or different load current values. It is e.g. possible to store each stator flux saturation saliency angle of the aforementioned set and the corresponding stator current phasor and/or the corresponding magnetizing current value and/or the corresponding load current value.

This advantageously allows to simplify the determination of a comparative stator flux saturation saliency angle which corresponds to the actual stator flux saturation saliency angle determined in the third step.

In another embodiment, the set of temperature-independent comparative stator flux saturation saliency angles is determined at a selected machine temperature, in particular at an ambient temperature. As explained before, the value of the stator flux saturation saliency angle does not depend on the actual rotor temperature, e.g. does not change if the temperature changes. Using only one single machine temperature therefore provides the desired set of temperature-independent comparative stator flux saturation saliency angles while also minimizing the effort of determination and thus for implementing the proposed method.

In another embodiment, the stator flux saturation saliency angle is determined with respect to or as a main flux saturation saliency angle.

In an alternative embodiment, the stator flux saturation saliency angle is determined with respect to or as a leakage flux saturation saliency angle.

In this context, both, the main flux and the leakage flux can be different fractions of the stator flux. Determining the stator flux saturation saliency angle with respect to or as the main flux saturation saliency angle or the leakage flux saturation saliency angle advantageously provides accurate and reliable alternative approaches to determine the stator flux saturation saliency angle.

In another embodiment, the temperature is determined as an output value of a control function, wherein an input of the control function is the deviation or a deviation-dependent value. As outlined before, a changing output value will affect the input value, namely the deviation. The control function is in particular chosen such that it determines an output value which minimizes the input value.

This advantageously allows a computationally fast but accurate and reliable determination of the rotor temperature.

In a preferred embodiment, the control function is a PI (proportional integral) control function. Choosing the control function as a PI control function advantageously allows a very efficient determination of the rotor temperature since the I-portion results in a minimization of the deviation and the P-portion results in a computationally fast determination.

In another embodiment, the stator flux saturation saliency angle is determined depending on the stator current phasor, in particular using the aforementioned machine model. This and corresponding advantages have been explained before.

In another embodiment, the machine model is a current model, wherein at least one rotor temperature-dependent parameter is the rotor time constant. This and corresponding advantages have been explained before.

Further proposed is an apparatus for determining the temperature of a rotor of an electric induction machine. The apparatus is configured to perform a method of determining a temperature of a rotor according to one of the embodiments disclosed therein. In particular, the apparatus comprises means for determining or providing a set of temperature-independent comparative stator flux saturation saliency angles in a reference frame. Further, the apparatus comprises means for determining an actual stator flux saturation saliency angle in the reference coordinate frame depending on a machine model comprising at least one rotor temperature-dependent parameter. Further, the apparatus comprises means for determining a temperature-independent comparative stator flux saturation saliency angle and the deviation between the actual stator flux saturation saliency angle and a temperature-independent comparative stator flux saturation saliency angle and means for determining the rotor temperature as the temperature that minimizes said deviation.

The means for determining or providing a set of temperature-independent comparative stator flux saturation saliency angles can e.g. be provided by a processing unit, wherein the processing unit can be e.g. be provided by or comprise a microcontroller. Alternatively, the means can be provided by or comprise a memory unit.

The means for determining the actual stator flux saturation saliency angle can e.g. comprise the processing unit or another processing unit. Further, said means can comprise one or more sensors, e.g. for sensing stator phase currents.

The means for determining the predetermined deviation and the means for determining the rotor temperature can comprise the evaluation unit or a further evaluation unit.

The invention will be described with reference to the attached figures. The figures show

Figure 1 a schematic block diagram of a method for determining a rotor temperature,

Figure 2 an exemplary illustration of a rotor flux linkage angle error,

Figure 3 a schematic diagram of stator flux saturation saliency angles for different load values,

Figure 4 an exemplary diagram of stator flux saturation saliency angles for different temperature deviations and

Figure 5 a schematic block diagram of an electric induction machine and a corresponding control unit.

In the following, the same reference numerals will denote the same or similar technical features.

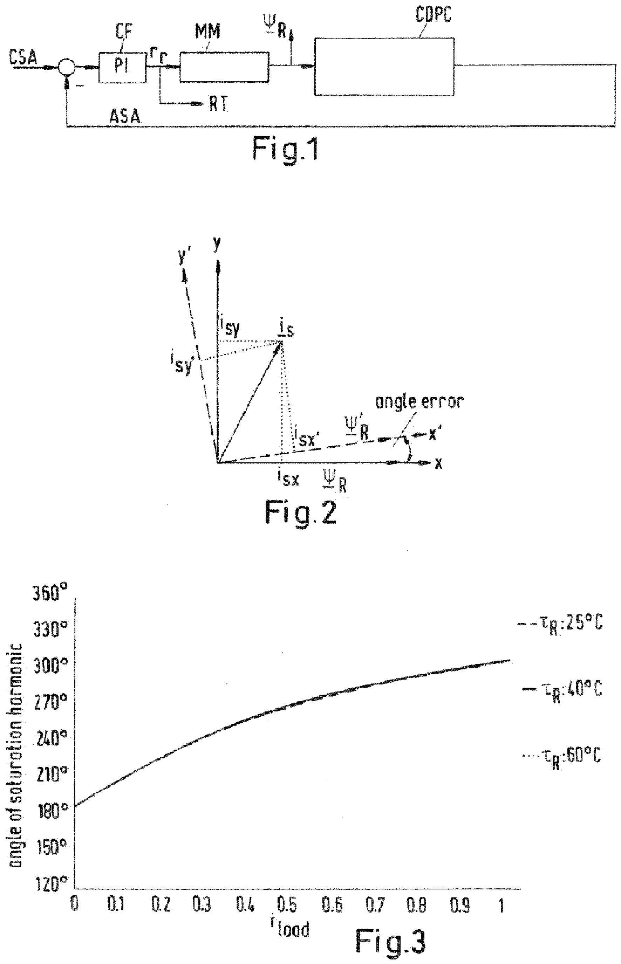

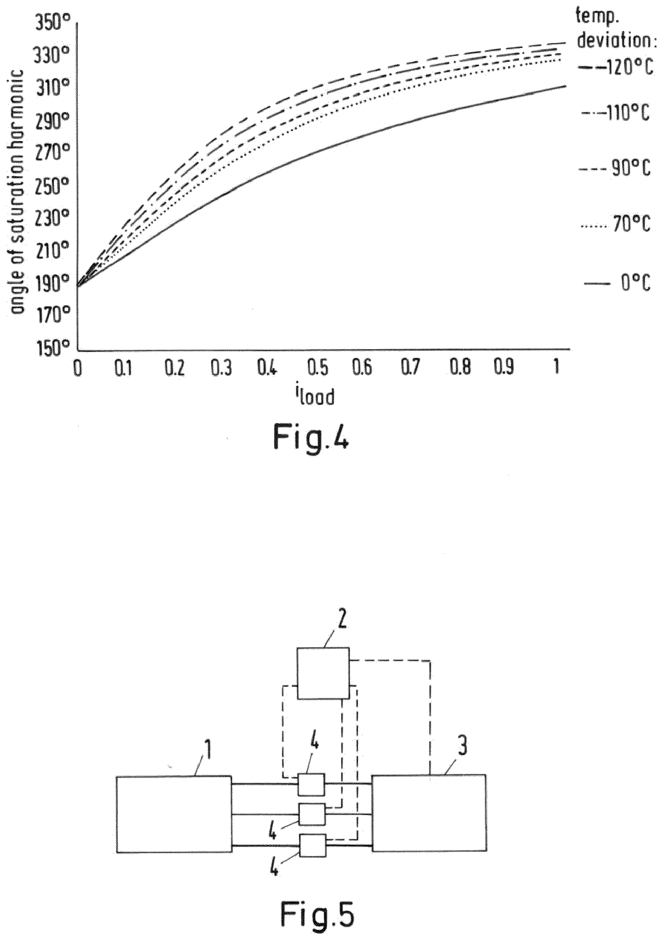

Figure 1 shows a schematic block diagram of a method for determining a rotor temperature RT of an electric induction machine 1 (see figure 5). A first input for the method is provided by a set of temperature-independent comparative stator flux saturation saliency angles CSA. Said comparative stator flux saturation saliency angles are temperature-independent stator flux saturation saliency angles and are provided by predetermined values, in particular by values determined during commissioning the electric machine 1. Further, these comparative stator flux saturation saliency angles CSA are determined in a reference frame.

A further input for the method is an actual stator flux saturation saliency angle ASA which is also determined in the reference coordinate frame. Said actual stator flux saturation saliency angle ASA can e.g. be determined by the INFORM method.

Further, a deviation between the actual stator flux saturation saliency angle ASA and the comparative stator flux saturation saliency angle CSA is determined. This is indicated by a minus operator.

The actual stator flux saturation saliency angle ASA and the comparative stator flux saturation saliency angle CSA are saliency angles that are determined under the condition of equal or similar magnetizing current values and/or load current values. It is e.g. possible to determine the magnetizing current values and/or load current values for which the actual stator flux saturation saliency angle is determined and to then use this/these current value(s) to determine the comparative stator flux saturation saliency angle CSA from the set of predetermined temperature-independent comparative stator flux saturation angles.

The deviation provides an input to a control function, in particular a PI control function CF. An output value of the control function is a rotor resistance parameter $r_R$. This rotor resistance $r_R$ provides a parameter of a machine model MM which is used to determine the rotor flux linkage phasor $\psi_R$. Based on the machine model MM with the actual rotor resistance parameter $r_R$, the corresponding actual stator flux saturation saliency angle can be determined. This can e.g. be performed using a so-called current-derivation-phasor calculation CDPC which can be part of the aforementioned INFORM method.

The control loop shown in figure 1 tunes the rotor resistance parameter $r_R$ such that the deviation, namely the difference between the actual stator flux saturation saliency angle ASA and the corresponding comparative stator flux saturation saliency angle CSA is minimized. Then, the corresponding rotor temperature RT can be determined as a function of the rotor resistance parameter $r_R$. It is e.g. possible that the rotor temperature RT is determined depending on the following relationship

$$r_R = r_0 \times (1 + \alpha \times \delta T) \qquad\qquad \text{formula 5,}$$

wherein $r_0$ denotes a reference rotor resistance determined at a predetermined reference temperature and $\alpha$ denotes a temperature coefficient and $\delta T$ determines the difference between the reference temperature and the actual rotor temperature RT. Then, the rotor temperature can be determined as

$$RT = RT_0 + \delta T \qquad\qquad \text{formula 6,}$$

wherein $RT_0$ denotes a reference resistance at the reference temperature.

Figure 2 shows a schematic illustration of a rotor flux linkage angle error. The true rotor flux linkage phasor $\psi_R$ represents the rotor flux which is actually present in the electric machine 1. Based on the machine model MM (see figure 1) a calculated rotor flux linkage phasor $\underline{\psi}'_R$ can be calculated, wherein the value of this calculated rotor flux linkage phasor $\underline{\psi}'_R$ depends on the rotor temperature RT. As shown in figure 2, there is an angle error between the true rotor flux linkage phasor $\psi_R$ and the calculated rotor flux linkage phasor $\underline{\psi}'_R$. Since the machine control, in particular the current control in a so-called field-oriented control of the electric machine 1 is based on the calculated rotor flux linkage phasor $\underline{\psi}'_R$, the current components $i_X$, $i_Y$ of the stator phase line current $i_s$ will be incorrectly adapted by said current control which consequently leads to a shift of the point of operation of the electric machine 1. This shift consequently affects the stator flux saturation saliency angle which can be determined by using the well-known INFORM-method.

Figure 3 shows the stator flux saturation saliency angle ASA for different load current values $i_{load}$ representing different machine load values. It can be seen that rotor temperature RT values of 25°C (represented by the dashed line), 40 °C (represented by the solid line) and 60 °C (represented by the dotted line) provide the same stator flux saturation saliency angles ASA if the rotor resistance or rotor time constant within the machine model is correctly adapted to the actual rotor temperature RT. This consequently means that the rotor temperature RT does not affect the course of stator flux saturation saliency angles ASA for different load values.

Figure 4 shows stator flux saturation saliency angles ASA which are determined for different load values (represented by different load current values $i_{load}$) in the case of different deviations of the actual rotor temperature RT from a correct rotor temperature if the machine model MM (see figure 1) is used for controlling the electric machine 1 (see figure 5), in particular in a current-based control.

The solid line represents a deviation of 0°C, e.g. the course of the stator flux saturation saliency angle ASA for a correct rotor temperature. The dotted line represents a deviation of 70 °C, the narrow dashed line represents a deviation of 90 °C, the dahsh-dotted line represents a deviation of 110°C and the wide dashed line represents a deviation of 120°C,

It can be seen that in the case of an incorrect rotor temperature value, a deviation between the reference stator flux saturation saliency angle CSA the actual stator flux saturation saliency angle ASA exists. Further shown is that the higher the temperature deviation from the correct temperature value, the higher the deviation between the correct, i.e. the reference, stator flux saturation saliency angle and the actual stator flux saturation saliency ASA angle.

Figure 5 shows a schematic block diagram of an induction machine 1 and a corresponding control unit 2. The induction machine 1 is electrically connected to an inverter 3. Further provided are current sensors 4 which are able to measure the stator phase currents in each phase. The control unit 2 is connected to the current sensors 4 and the inverter 3. The control unit 2 allows the determination of the actual stator flux saturation saliency angle ASA (see fig. 1) in the reference coordinate frame depending on the aforementioned machine model MM which comprises at least one rotor temperature-dependent parameter. Further, the control unit 2 allows to determine the aforementioned deviation and the rotor temperature RT as the temperature which minimizes said deviation. In order to determine the actual stator flux saturation saliency angle ASA, the measured stator phase currents can be used.

**Claims**

1. A method of determining a temperature of a rotor (RT) of an electric induction machine (1) comprising the steps of:

    - determining a set of temperature-independent comparative stator flux saturation saliency angles (CSA) in a reference frame,
    - determining an actual stator flux saturation saliency angle (ASA) in the reference coordinate frame depending on a machine model (MM) comprising at least one rotor temperature-dependent parameter,
    - determining a temperature-independent comparative stator flux saturation saliency angle (CSA),
    - determining a deviation between the actual stator flux saturation saliency angle (ASA) and the temperature-independent comparative stator flux saturation saliency angle (CSA),
    - determining the rotor temperature (RT) as the temperature which minimizes said deviation.

2. The method according to claim 1, **characterized in that** a temperature-dependent rotor resistance parameter ($r_R$) of the machine model (MM) is determined which minimizes the deviation, wherein the rotor temperature (RT) is determined depending on said rotor resistance parameter ($r_R$).

3. The method according to one of the preceding claims, **characterized in that** the reference frame is a coordinate frame fixed to the stator current angle or to multiples thereof.

4. The method according to one of the preceding claims, **characterized in that** the set of temperature-independent comparative stator flux saturation saliency angles (CSA) is determined with respect to a set of stator current phasors for different magnetizing currents and/or load current values.

5. The method according to claim 4, **characterized in that** the set of temperature-independent comparative stator flux saturation saliency angles (CSA) is determined at a selected machine temperature, in particular an ambient temperature.

6. The method according to one of the preceding claims, **characterized in that** the stator flux saturation saliency angle (CSA, ASA) is determined as a main flux saturation saliency angle.

7. The method according to one of the claims 1 to 5, **characterized in that** the stator flux saturation saliency angle (CSA, ASA) is determined as a leakage flux saturation saliency angle.

8. The method according to one of the preceding claims, **characterized in that** the temperature (RT) is determined as an output value of a control function, wherein an input of the control function is the deviation or a deviation-dependent value.

9. The method according to claim 8, **characterized in that** the control function is a PI control function.

10. The method according to one of the preceding claims, **characterized in that** the stator flux saturation saliency angle (ASA) is determined depending on the stator current phasor.

11. The method according to one of the preceding claims, **characterized in that** the machine model (MM) is a current model, wherein at least one rotor temperature-dependent parameter is the rotor time constant.

12. An apparatus for determining a temperature of a rotor (RT) of an electric induction machine (1) comprising means for determining a set of temperature-independent comparative stator flux saturation saliency angles (CSA) in a reference frame, means for determining an actual stator flux saturation saliency angle (ASA) in the reference coordinate frame depending on a machine model (MM) comprising at least one rotor temperature-dependent parameter, means for determining a temperature-independent comparative stator flux saturation saliency angle (CSA) and a deviation between the actual stator flux saturation saliency angle (ASA) and the temperature-independent comparative stator flux saturation saliency angle (CSA) and means for determining the rotor temperature (RT) as the temperature which minimizes said deviation.

**Patentansprüche**

1. Verfahren zum Bestimmen einer Temperatur eines Rotors (RT) einer elektrischen Induktionsmaschine (1), als Schritte umfassend:

   - Bestimmen einer Menge von temperaturunabhängigen räumlichen Vergleichs-Flussverkettungssättigungsasymmetriewinkeln (CSA) in einem Bezugsrahmen,
   - Bestimmen eines tatsächlichen räumlichen Flussverkettungssättigungsasymmetriewinkels (ASA) in dem Bezugskoordinatenrahmen abhängig von einem Maschinenmodell (MM), das mindestens einen rotortemperaturunabhängigen Parameter umfasst,
   - Bestimmen eines temperaturunabhängigen räumlichen Vergleichs-Flussverkettungssättigungsasymmetriewinkels (CSA),
   - Bestimmen einer Abweichung zwischen dem tatsächlichen räumlichen Flussverkettungssättigungsasymmetriewinkel (ASA) und dem räumlichen Vergleichs-Flussverkettungssättigungsasymmetriewinkel (CSA),
   - Bestimmen der Rotortemperatur (RT) als Temperatur, welche diese Abweichung minimiert.

2. Verfahren nach Anspruch 1, **dadurch gekennzeichnet, dass** ein temperaturabhängiger Rotorwiderstandsparameter (rR) des Maschinenmodells (MM) bestimmt wird, der die Abweichung minimiert, wobei die Rotortemperatur (RT) abhängig von dem Rotorwiderstandsparameter (rR) bestimmt wird.

3. Verfahren nach einem der vorangehenden Ansprüche, **dadurch gekennzeichnet, dass** der Bezugsrahmen ein Koordinatenrahmen ist, der zum Statorstromwinkel oder zu dessen Mehrfachen ortsfest ist.

4. Verfahren nach einem der vorangehenden Ansprüche, **dadurch gekennzeichnet, dass** die Menge von temperaturunabhängigen räumlichen Vergleichs-Flussverkettungssättigungsasymmetriewinkeln (CSA) in Bezug auf eine Menge von Statorstromphasoren für unterschiedliche Magnetisierungsströme und/oder Laststromwerte bestimmt wird.

5. Verfahren nach Anspruch 4, **dadurch gekennzeichnet, dass** die Menge von temperaturunabhängigen räumlichen Vergleichs-Flussverkettungssättigungsasymmetriewinkeln (CSA) bei einer ausgewählten Maschinentemperatur, insbesondere einer Umgebungstemperatur, bestimmt wird.

6. Verfahren nach einem der vorangehenden Ansprüche, **dadurch gekennzeichnet, dass** der räumliche Flussverkettungssättigungsasymmetriewinkel (CSA, ASA) als ein räumlicher Hauptflussverkettungssättigungsasymmetriewinkel bestimmt wird.

7. Verfahren nach einem der Ansprüche 1 bis 5, **dadurch gekennzeichnet, dass** der räumliche Flussverkettungssättigungsasymmetriewinkel (CSA, ASA) als räumlicher Streuflussverkettungssättigungsasymmetriewinkel bestimmt wird.

8. Verfahren nach einem der vorangehenden Ansprüche, **dadurch gekennzeichnet, dass** die Temperatur (RT) als Ausgangswert einer Regelfunktion bestimmt wird, wobei eine Eingabe der Regelfunktion die Abweichung oder ein abweichungsabhängiger Wert ist.

9. Verfahren nach Anspruch 8, **dadurch gekennzeichnet, dass** die Steuerfunktion eine PI-Regelfunktion ist.

10. Verfahren nach einem der vorangehenden Ansprüche, **dadurch gekennzeichnet, dass** der räumliche Flussverkettungssättigungsasymmetriewinkel (ASA) abhängig von dem Statorstromphasor bestimmt wird.

11. Verfahren nach einem der vorangehenden Ansprüche, **dadurch gekennzeichnet, dass** das Maschinenmodell (MM) ein Strommodell ist, wobei mindestens eine rotortemperaturabhängige Parameter die Rotorzeitkonstante ist.

12. Vorrichtung zum Bestimmen einer Temperatur eines Rotors (RT) einer elektrischen Induktionsmaschine (1), die umfasst: Mittel zum Bestimmen einer Menge von temperaturunabhängigen räumlichen Vergleichs-Flussverkettungssättigungsasymmetriewinkeln (CSA) in einem Bezugsrahmen, Mittel zum Bestimmen eines tatsächlichen räumlichen Flussverkettungssättigungsasymmetriewinkels (ASA) in dem Bezugskoordinatenrahmen abhängig von einem Maschinenmodell (MM), das mindestens einen rotortemperaturabhängigen Parameter umfasst, Mittel zum Bestimmen eines temperaturunabhängigen räumlichen Vergleichs-Flussverkettungssättigungsasymmetriewinkels (CSA) und einer Abweichung zwischen dem tatsächlichen ausgeprägten Flussverkettungssättigungsasymmetriewinkel (ASA) und dem temperaturunabhängigen räumlichen Vergleichs-Flussverkettungssättigungsasymmetriewinkel und Mittel zum Bestimmen der Rotortemperatur (RT) als die Temperatur, die diese Abweichung minimiert.

**Revendications**

1. Procédé de détermination d'une température d'un rotor (RT) d'une machine à induction électrique (1) comprenant les étapes de :

   - détermination d'un ensemble d'angles de saillance par saturation de flux de stator comparatifs (CSA) indépendants de la température dans un cadre de référence,
   - détermination d'un angle de saillance par saturation de flux de stator réel (ASA) dans le cadre de coordonnées de référence en fonction d'un modèle de machine (MM) comprenant au moins un paramètre dépendant de la température de rotor,
   - détermination d'un angle de saillance par saturation de flux de stator comparatif (CSA) indépendant de la température,
   - détermination d'un écart entre l'angle de saillance par saturation de flux de stator réel (ASA) et l'angle de saillance par saturation de flux de stator comparatif (CSA) indépendant de la température,
   - détermination de la température de rotor (RT) en tant que température qui minimise ledit écart.

2. Procédé selon la revendication 1, **caractérisé en ce qu'**un paramètre de résistance de rotor ($r_R$) dépendant de la température du modèle de machine (MM) est déterminé, qui minimise l'écart, dans lequel la température de rotor (RT) est déterminée en fonction dudit paramètre de résistance de rotor ($r_R$).

3. Procédé selon l'une des revendications précédentes, **caractérisé en ce que** le cadre de référence est un cadre de coordonnées fixé sur l'angle de courant de stator ou sur de multiples de celui-ci.

4. Procédé selon l'une des revendications précédentes, **caractérisé en ce que** l'ensemble d'angles de saillance par saturation de flux de stator comparatifs (CSA) indépendants de la température est déterminé par rapport à un ensemble de phaseurs de courant de stator pour différents courants de magnétisation et/ou valeurs de courant de charge.

5. Procédé selon la revendication 4, **caractérisé en ce que** l'ensemble d'angles de saillance par saturation de flux de stator comparatifs (CSA) indépendants de la température est déterminé à une température de machine sélectionnée, en particulier à température ambiante.

6. Procédé selon l'une des revendications précédentes, **caractérisé en ce que** l'angle de saillance par saturation de flux de stator (CSA, ASA) est déterminé en tant qu'angle de saillance par saturation de flux principal.

7. Procédé selon l'une des revendications 1 à 5, **caractérisé en ce que** l'angle de saillance par saturation de flux de stator (CSA, ASA) est déterminé en tant qu'angle de saillance par saturation de flux de fuite.

8. Procédé selon l'une des revendications précédentes, **caractérisé en ce que** la température (RT) est déterminée en tant que valeur de sortie d'une fonction de contrôle, dans lequel une entrée de la fonction de contrôle est l'écart ou une valeur dépendant de l'écart.

9. Procédé selon la revendication 8, **caractérisé en ce que** la fonction de contrôle est une fonction de contrôle PI.

10. Procédé selon l'une des revendications précédentes, **caractérisé en ce que** l'angle de saillance par saturation de flux de stator (ASA) est déterminé en fonction du phaseur de courant de stator.

11. Procédé selon l'une des revendications précédentes, **caractérisé en ce que** le modèle de machine (MM) est un modèle de courant, dans lequel au moins un paramètre dépendant de la température de rotor est la constante temporelle de rotor.

12. Appareil pour déterminer une température d'un rotor (RT) d'une machine à induction électrique (1) comprenant un moyen pour déterminer un ensemble d'angles de saillance par saturation de flux de stator comparatifs (CSA) indépendants de la température dans un cadre de référence, un moyen pour déterminer un angle de saillance par saturation de flux de stator réel (ASA) dans le cadre de coordonnées de référence en fonction d'un modèle de machine (MM) comprenant au moins un paramètre dépendant de la température de rotor, un moyen pour déterminer un angle de saillance par saturation de flux de stator comparatif (CSA) indépendant de la température et un écart entre l'angle de saillance par saturation de flux de stator réel (ASA) et l'angle de saillance par saturation de flux de stator comparatif (CSA) indépendant de la température et un moyen pour déterminer la température de rotor (RT) en tant que température qui minimise ledit écart.

Fig.1

Fig.2

Fig.3

11

Fig.4

Fig.5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2405570 A1

- WO 2009083324 A1

**Non-patent literature cited in the description**

- **C. SPITERI.** Sensorless control of induction machines at zero and low frequency using zero sequence currents. *IEEE Transactions on Industrial Electronics,* 2005, vol. 53 (1), 195-206
- **D. REIGOSA.** Sensorless Control of Doubly-Fed Induction Generators Based on Stator High-Frequency Signal Injection. *IEEE Transactions on Industry Application,* 2014

- **P. H. MELLOR ; D. R. TURNER.** Real Time Prediction of Temperatures in an Induction Motor Using a Microprocessor. *Electric Machine Power Systems,* 1988, 333-352
- **M. SCHROEDL.** Sensorless control of AC machines at low speed and standstill based on the INFORM method. *IEEE Industry Applications Conference,* 1996, 270-277